# EUROPEAN PATENT SPECIFICATION

(11) **EP 0 675 405 B1**
(45) Date of publication and mention of the grant of the patent: **14.11.2001**
(21) Application number: 95420075.4
(22) Date of filing: 24.03.1995
(51) Int. Cl.: G03D 3/06, F16K 15/18

(54) **Flow control system and method**
Verfahren und Vorrichtung zur Flüssigkeitssteuerung
Méthode et dispositif de contrôle du flux d'un fluide

(30) Priority: 31.03.1994 US 220986
(43) Date of publication of application: 04.10.1995
(73) Proprietor: EASTMAN KODAK COMPANY, Rochester, New York 14650-2201 (US)
(72) Inventor: Harris, Clark E., c/o Eastman Kodak Company, Rochester, New York 14650-2201 (US); Manico, Joseph Anthony, c/o Eastman Kodak Company, Rochester, New York 14650-2201 (US); Cooke, Mari-Kim, c/o Eastman Kodak Company, Rochester, New York 14650-2201 (US); Carmen, Jerry, c/o Eastman Kodak Company, Rochester, New York 14650-2201 (US)
(74) Representative: Buff, Michel

(56) References cited:
- EP-A- 0 130 853
- DE-C- 3 742 821
- GB-A- 2 263 155
- US-A- 3 698 454

## Description

### FIELD OF THE INVENTION

The present invention relates to a flow control system and method. More particularly, the invention concerns a method and system for controlling the flow of fluid between mating containerized systems, such as a chemical replenishment container and a photoprinting machine, substantially without leaking and exposing the user to such fluid.

### BACKGROUND OF THE INVENTION

Flow control devices, such as valves, are widely known to be used for regulating the flow of materials, primarily fluids, from one containerized system to another.

A conventional way to supply a fluid material to a containerized system, such as photoprinting machine, involves dispensing the fluid material from a receptacle, for example a flexible container, into a fluid reservoir or distribution channel in the photoprinting machine. The flexible containers or bottles currently used to replenish chemicals in these machines require that the user first open the container and then pour the contents into the photoprinting machine. One problem that results during the transfer of the chemicals is leakage. Chemical leakage, of course, exposes the operator to potential hazardous effects. Moreover, materials waste and unnecessary expense are related problems that persist with existing flow control systems. These shortcomings necessitate a need for an improved flow control system and method which can supply materials, such as photographic chemicals, to photoprinting machines, and the like, in a containerized system without leakage. Such systems would then present to the operator as a dripless or dry transfer system.

Consequently, it is necessary in the prior art to provide an apparently dry system for transferring materials between containerized systems. Preferably, in this system, a flow control or valving arrangement which communicates with both containerized systems (e.g., the flexible container for photographic chemicals and the photoprinting machine) is utilized such that when one containerized system is removed from the other, the valve would close and the user would not be exposed to leakage.

In U.S. patent 4,958,666 to Kocourek et al., corresponding to DE-C-3742821, a storage canister for process liquid includes a receptacle having a top side formed with two apertures. The receptacle houses two leakage proof pouches of elastic material each having an opening closed by a control valve. An upper part of respective valve housing projects through the aperture and is secured thereto while the lower part of the valve housing within the corresponding pouch extends up to the bottom of the receptacle. The pouches are arranged one above the other between the top cover and the bottom of the receptacle and being extendable to such an extent that their combined volumes correspond approximately to the volume of the receptacle. The receptacle has the form of a flat parallel epiped so that a plurality of equal storage canisters are inserted into a drawer of wet processing apparatus and the normally closed control valves are activated by suction or by over-pressure from suction or pressure devices in the processing apparatus.

### SUMMARY OF THE INVENTION

It is, therefore, an object of the invention to provide a flow control system that eliminates leakage during fluid transfer between mating containerized systems.

Another object of the invention is to provide a flow control system for controlling the supply of a fluid to a containerized system without the user having to first open the containerized system prior to transferring the fluid into another containerized system.

Still another object of the present invention is to provide a flow control system for controlling the supply of a fluid from a first to a second containerized system such that when it is desired to remove the first containerized system from the second containerized system, no fluid is leaked during the process.

Another object of the invention is to provide a flow control system that can open and close a flow path between mating containerized systems without leakage.

Yet another object of the invention is to provide a method for transferring fluids between mating containerized system as defined in claim 1 without leakage and waste of the transferred material.

Accordingly, for accomplishing these and other objects of the invention, there is provided a flow control system as defined in claim 1 for controlling the flow of fluid between first and second containerized systems. The first and second containerized systems include first and second openings, respectively. The flow control system comprises a first flow control member positioned at the first opening of the first containerized system. First flow control member has a first body member, a first fluid flow channel, a first seal having a first opening therethrough arranged in the first fluid flow channel, a fluid entrance port in fluid communications with the first fluid flow channel, a spring member retained in the first fluid flow channel, and a piston member normally biased by the spring against the first seal to close the first fluid channel.

Further, the flow control system includes a second flow control member positioned at the second opening. Second flow control member comprises a second body member having a second fluid flow channel, a second seal having a second opening therethrough arranged in the second fluid flow channel, a stop member, and a proboscis member slidable axially in the second opening of the second seal and in the first opening of the first seal, the proboscis member having an open end portion, and at least one exit port on the opposite end within the second body member, and a through channel extending from the open end to the exit port.

In this embodiment of the invention, when the first opening of the first containerized system is urged toward the second opening of the second containerized system, the proboscis member partially withdraws from the second seal toward the stop member, and penetrates the first opening of the first seal. The open end portion of the proboscis member engages and displaces the piston member into deforming contact with the spring member thereby positioning the entrance port in fluid communication with the through channel of the proboscis member.

Moreover, when the first opening of the first containerized system is urged into proximate contact with the second opening of the second containerized system, the proboscis member withdraws through the second opening of the second seal and comes to rest on the stop member in the second housing, thereby enabling an open fluid flow path from the entrance port, through the open end of the proboscis member, through the through channel of the proboscis member, through the exit port, and to the fluid inlet channel of the second containerized system.

Finally, when the first opening of the first containerized system is urged away from the second opening of the second containerized system, the proboscis member partially withdraws from the first opening of the first seal and away from the piston member thereby allowing the piston member to seal against the first seal, and sequentially the exit port of the proboscis member is positioned in sealing relation with the second seal, thus closing the open fluid flow path between the first and second containerized system.

The method of the invention as defined in claim 6 is useful for controlling fluid flow from a first containerized system having an openable end portion, to a second containerized system having a fluid inlet channel. The method comprises the step of providing a first flow control member, as previously described, positioned in the openable end portion of the container and providing a second flow control member, as described above, positioned in the fluid inlet channel of the second containerized system. A second face flange of the second flow control member is urged onto a first face flange of the first flow control member so that the proboscis member at least partially engages the first flexible seal and displaces the piston toward the spring member thereby opening a first flow path extending between the entrance port, the opening of the proboscis member, and through the through channel of the proboscis member. The second face flange of the second flow control member is urged into proximate contact with the first face flange of the first flow control member thereby opening a second fluid flow path extending from the entrance port, to the opening and through channel of the proboscis member, through the exit port of the proboscis member and terminating in the inlet channel of the second containerized system. When it is desired to terminate the flow between the first and second containerized systems, the second face flange of the second flow control member is urged away from the first face flange of the first flow control member, thereby closing the first and second flow paths between the entrance port and the proboscis member and the exit port and the inlet channel, respectively.

Accordingly, advantageous effects of the present invention are that it provides flow control systems and a method for controlling the flow of fluids between mating containerized systems without leakage, that are simple to operate, easy to manufacture, and inexpensive to produce.

### BRIEF DESCRIPTION OF THE DRAWINGS

The foregoing as well as other objects, features and advantages of this invention will become more apparent from the appended Figures, wherein like reference numerals denote like elements, and wherein:
Figure 1 is an exploded perspective view of the flow control system according to the invention;
Figure 2 is a sectional view of the first and second flow control members with the proboscis member of the second flow control member just entering the first control member;
Figure 3 is a sectional view of both flow control members with the proboscis member of the second flow control member open;
Figure 4 is a sectional view of both flow control members with the proboscis member fully communicating with the first flow control member, thereby opening a fluid flow path between both control members;
Figure 5 is an exploded perspective view of the first flow control member;
Figure 6 is an exploded perspective view of the second flow control member;
Figure 7 is a side view of fluid supply container and communicating flow control members therein;
Figure 8 is an isometric view of a half portion of a housing assemblage for enclosing a containerized system; and
Figure 9 is an isometric view of an assembled housing for one containerized system.

### DETAILED DESCRIPTION OF THE INVENTION

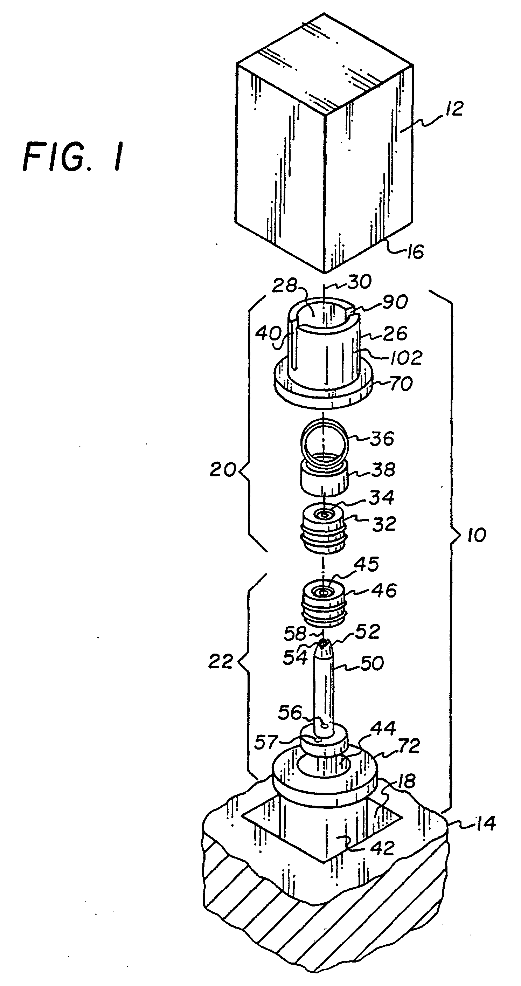

Turning now to the drawings, and more particularly to Figure 1, a flow control system **10** is illustrated for controlling the flow of fluids between mating first and second containerized systems **12,14.** The first containerized system **12** has a first opening **16,** and the second containerized system **14** includes a second opening **18,** each for containing members of the flow control system **10.** In a particular embodiment of the invention, the first containerized system **12** may be any sort of fluid container, such as a cartridge, bag-in-a-box or bottle; and, the second containerized system may be a fluid replenishable machine such as a photoprinting machine or copier. Therefore, broadly defined, flow control system **10** comprises a first flow control member **20** positioned at the first opening **16** of the first containerized system **12;** and, a second flow control member **22** positioned at the second opening **18** of the second containerized system **14**.

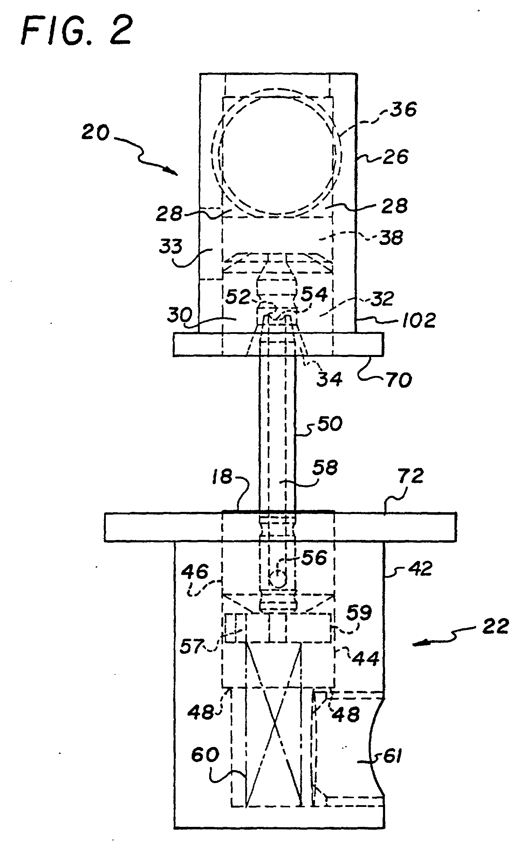

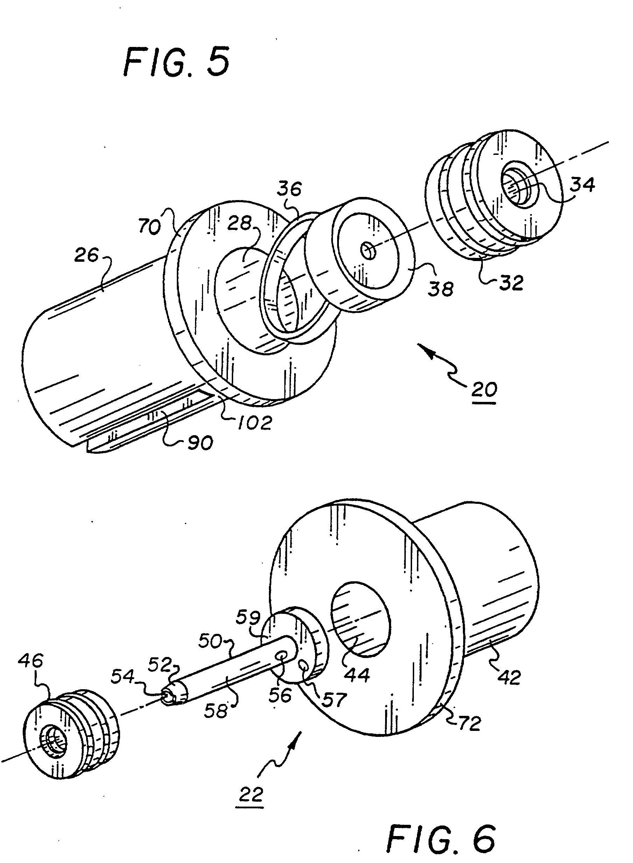

In Figs. 1-5, first flow control member **20** is shown to include a first body member **26,** a first fluid flow channel **28** passing through a central portion **30** of the body member **26,** a fluid entrance port **33** in fluid communication with the flow channel **28,** and a first seal **32** having a first opening **34** therethrough arranged in the first fluid flow channel **28.** Moreover, as best seen in Fig. 5, a first biasing means, preferably an annular spring **36,** is retained in the first fluid flow channel **28,** normally biasing a piston member **38** against the first seal **32** to close the first fluid flow channel **28** when desired. Moreover, in Figs 2-4, annular spring **36** is shown providing support for piston member **38** against first seal **32,** thereby preventing fluid from escaping the first containerized system **12**.

Referring again to Figs. 1-4, and 6, second flow control member **22,** which cooperates with the first control member **20,** is positioned in the second opening **18** of the second containerized system **14.** The second flow control member **22** comprises a second body member **42** having a second fluid flow channel **44,** a second flexible seal **46** arranged in the second fluid flow channel **44,** a shoulder portion **48** positioned within channel 44 beyond the second flexible seal **46,** and a displaceable proboscis member **50.** As best illustrated in Fig. 6, the proboscis member **50** has an open end **52** and a notched portion **54** surrounding the open end **52** which projects outwardly of the second body member **42.** Further, proboscis member **50** includes at least one radial exit port **56,** a through channel **58** extending from the open end **52** to the exit port **56,** and an integral or attached stop member **59** positioned beyond the exit port **56** for contacting the shoulder portion **48** of the second housing **42.** An axial bore 57 is provided through stop member 59.

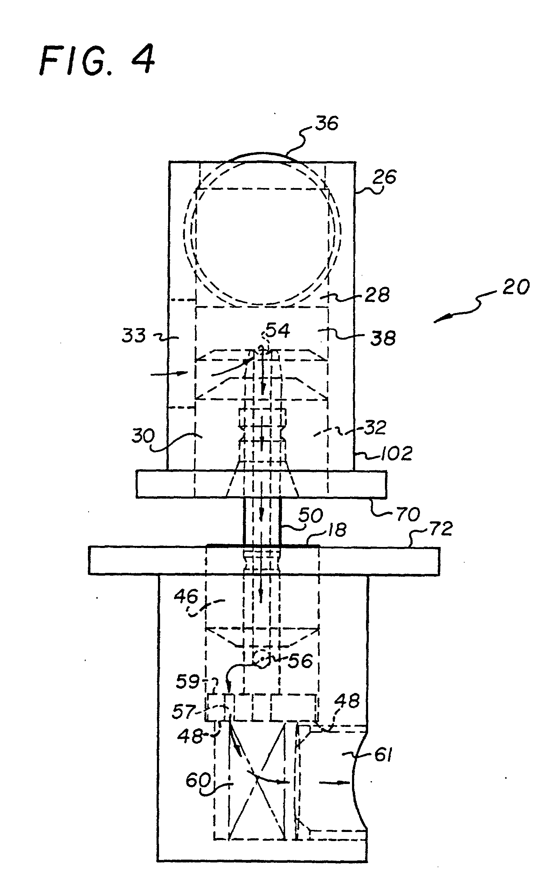

Figures 2-4 show the first flow control member **20** in the first containerized system **12** engaging the proboscis member **50** of the second flow control member **22.** According to Fig. 4, when the two flow control members **20,22** are in proximate contact, the proboscis member **50** remains inserted in the second seal **46** and is trapped in the second body member **42** by the second seal **46.** The second seal **46** is held flush mounted in the second body member **42** by an adhesive. As indicated below, the proboscis member **50** is sized for passing into and through channel **28** of the first flow control member **20.**

Again turning to Figs. 2-4, a second biasing member, i.e. second spring **60,** engages stop member 59 to force proboscis member **50** forward to seal against the second seal **46,** thus closing port 56 preventing fluid from escaping the second containerized system **14** or photoprinting machine when the first containerized system **12** is not present.

Although not required in the preferred embodiment of the invention, as depicted in Figs. 1-4, first body member **26** of the first flow control member **20** may be provided with a first face flange **70;** and, the second body member **42** of the second flow control member **22** may be provided with second face flange **72.** Face flanges **70,72** facilitate operation of the flow control system **10,** as described in details below.

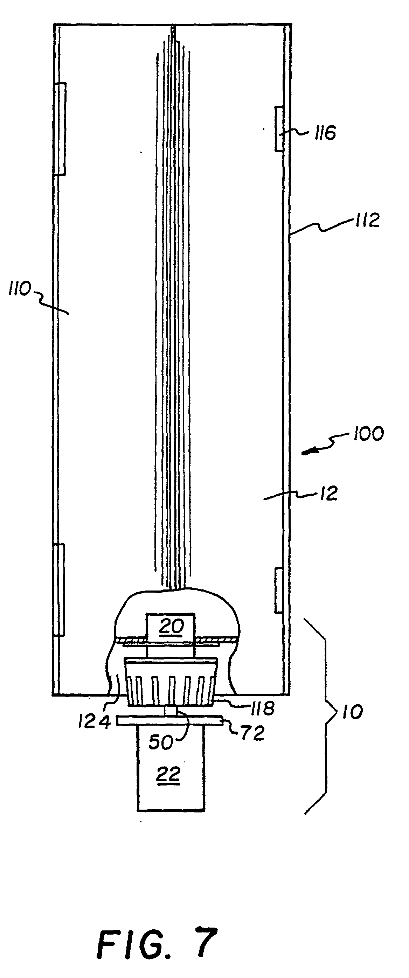

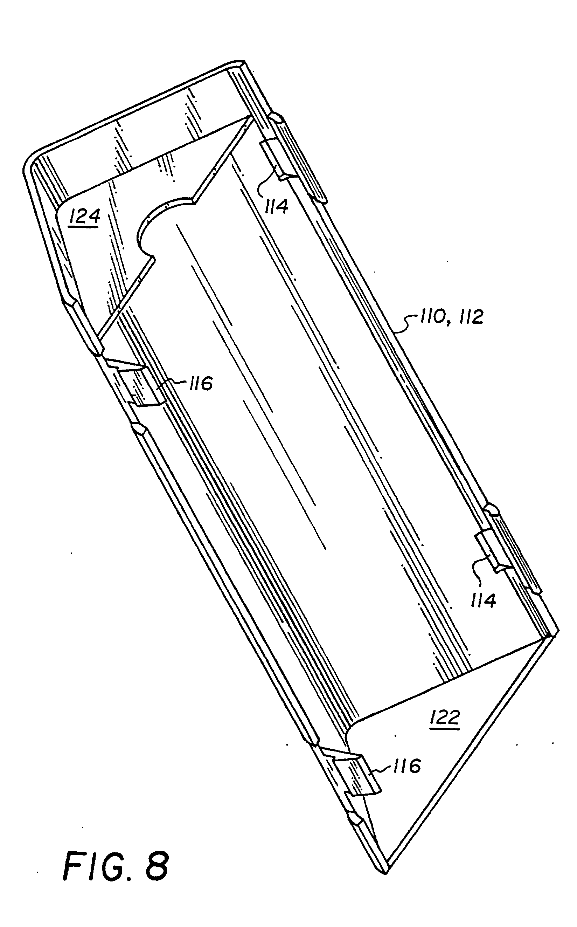

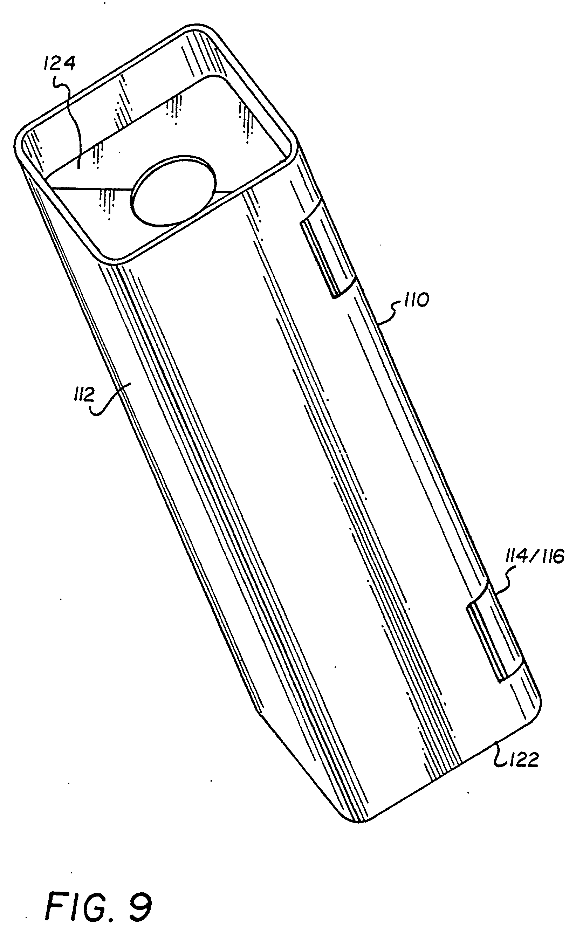

In Figs. 7-11, alternatively, a rigid housing assemblage **100** may enclose the first containerized system **12.** According to Figs. 7-9, a preferred housing assemblage **100** comprises first and second half portions **110,112,** each having a plurality of opposed slots **114** and snaps **116** for interlocking the first half portion **110** to the second half portion **112.** Thus, when the two half portions **110,112** are assembled, the snaps **116** of one fit snugly in the slots **114** of the other, thereby securely interlocking the half portions together. Interlocked half portions **110,112** are therefore formed having a closed end portion **122** and a partially opened end portion **124** for receiving and passing the necked down portion **102** of the first containerized system **12,** for example, a plastic bag, therethrough. According to Fig. 7, flow control system **10,** as described above, may comprise a cap **118** engaged with face flange **70** of the first containerized system **12** to retain the fluids therein before engagement with the second containerized system **14.**

According to Fig. 7, the housing assemblage **100** enclosing first containerized system **12** is mateable onto the photoprinting machine or second containerized system **14** in an inverted position. Cap **118** and first flow control member **20** normally are positioned at the bottom of the first containerized system **12** when inverted for fluid transfer between the two containerized systems **12,14.** As illustrated in Fig. 1, second containerized system **14** contains the second flow control member **22** having proboscis member **50** projecting upwardly toward the first flow control member **20** positioned in the first containerized system **12.**

Accordingly, in a preferred embodiment of invention, when transferring a fluid from one containerized system to the other, the first opening **16** of the first containerized system **12,** for example plastic bag containing photographic chemicals, is urged toward the second opening **18** of the second containerized system **14.** Alternatively, the first face flange **70** of the first body member **26** can be urged toward the second face flange **72** of the second body member **46** to achieve the same result. In either instance, the proboscis member **50** engages first seal **32,** partially withdraws through the second seal **46** toward the shoulder 48, and penetrates the first opening **34** of the first seal **32.** The open end portion **52** of the proboscis member **50** engages and displaces the piston member **38** into deforming contact with the annular spring **36,** thereby placing the entrance port **33** in fluid communication with notches 54, open end 52 and through channel **58** of the proboscis member **50.**

Further, when the first opening **16** of the first containerized system **12** is urged into proximate contact with the second opening **18** of the second containerized system **14** or photoprinting machine, the proboscis member **50** withdraws through the opening of the second seal **46** and comes to rest on shoulder 48. A fluid flow path is thereby opened from the entrance port **33,** through the open end **52** of the proboscis member **50,** through the through channel **58** of the proboscis member **50,** through the exit port **56,** through axial bore 57, and to the fluid inlet channel **61** of the second containerized system **14.**

Furthermore, as illustrated in Figs. 2-4, to terminate the flow of fluid between the first and second containerized systems **12,14,** the first flow control member **20** of the first containerized system **12** is urged away from the second flow control member **22** of the second containerized system **14,** as described in detail above. As indicated, the proboscis member **50** partially withdraws from the first opening **34** of the first seal **32** and away from the piston member **38** thereby allowing the piston member **38** to seal against the first seal **32**. Sequentially, the exit port **56** of the proboscis member **50** is positioned in a sealing relations with the second seal **46,** thus closing the open fluid flow path between the first and second containerized systems **12,14.**

In an alternative embodiment of the invention, when transferring a fluid from one containerized system to another (as shown in Figs. 2-4), the first opening **16** of the first containerized system **12** is urged toward the second opening **18** of the second containerized system **14,** the proboscis member **50** partially withdraws from the second seal **46** toward the shoulder portion **48,** and penetrates the first opening **34** of the first seal **32.** The open end portion **52** of the proboscis member **50** engages and displaces the piston member **38** into deforming contact with the spring member **36** thereby positioning the entrance port **33** in fluid communications with the through channel **58** of the proboscis member **50.** The proboscis member **50** withdraws through the second opening **45** of the second seal **46** and comes to rest on the shoulder portion **48** in the second body member **46,** thereby enabling an open fluid flow path from the entrance port **33,** through the open end **52** of the proboscis member **50,** through the through channel **58** of the proboscis member **50,** through the exit port **56,** through axial bore **57** and to the fluid inlet channel **61** of the second containerized system **14.**

As above, it is desired to terminate flow between the containerized systems **12,14,** the first opening **16** of the first containerized system **12** is urged away from the second opening **18** of the second containerized system **14.** The proboscis member **50** partially withdraws from the first opening **34** of the first seal **32** and away from the piston member **38** thereby allowing the piston member **38** to seal against the first seal **32.** The exit port **56** of the proboscis member 50 is positioned in a sealing relation with the second seal **46,** thus closing the open fluid flow path between the first and second containerized systems **12**,**14**.

In yet another embodiment of the invention, a method for controlling fluid flow from a first containerized system **12** having a first opening **16,** to a second containerized system **14** having a second opening **18,** comprises the step of providing first and second flow control members **20,22** positioned in the openings of the containerized systems, as described in details above (Fig. 1). The first opening **16** of the first containerized system **12** is urged toward the second opening **18** of the second containerized system **14** so that the proboscis member **50** of the second flow control member **22** at least partially penetrates the first opening **34** of the first flexible seal **32,** and subsequently engages and then displaces the piston member **38** toward the spring member **36** thereby opening a first flow path extending between the entrance port **33,** the opening **52** of the proboscis member **50,** and through the through channel **58** of the proboscis member **50.** Further, the first opening **16** of the first containerized system **12** is urged into proximate contact with the second opening **18** of the second containerized system **14.** When the two containerized systems **12,14** are in proximate contact, a second fluid flow path is opened extending from the entrance port **33,** to the opening **52** and through channel **58** of the proboscis member **50,** through the exit port **56** of the proboscis member **50,** through axial bore **57** and terminating in the second fluid flow channel or inlet channel **61** of the second containerized system. When it is desired to terminate fluid flow between the two containerized systems **12,14,** the second opening **18** of the second containerized system **14** is urged away from the first opening **16** of the first containerized system **12** thereby closing the first fluid flow path and the second fluid flow path.

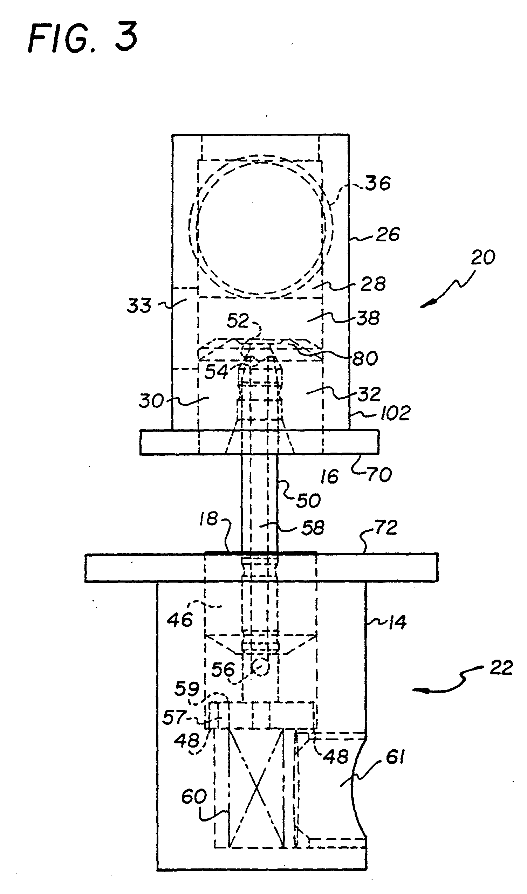

The flow control system **20** may also include an O-ring **80** supported on the first seal **32** for sealing between first seal **32** and piston member **36** against leakage. This is shown schematically in Figure 3. The advantage of the O-ring **80** is that it provides additional positive sealing of the orifice **52** surrounding the through channel **58** of the proboscis member **50** against leakage.

Moreover, according to Figs. 1 and 5, the method of the invention may alternatively include the step of providing a spring retaining slot **90** in the interior walls of the first body member **26** of the first containerized system to retain the spring member when deformed by the piston. The spring retaining slot 90 preferably extends along a circumferential portion of the wall of the first body member **26.**

To use the flow control systems **10** of present invention, the operator places the first containerized system **12** onto the second flow control system **22** positioned in the second opening **18** of the machine or second containerized system **14** (See Figs. 1-4). As described above, the first and second flow control members **20,22** are positioned in fluid communications with one another so that a flow path between them can be alternatively opened and closed as described. Thus, as the proboscis member **50** of the second containerized system **14** penetrates the first seal **32** of the first flow control member **20,** it is forced to retract in the second flow control member **22** by an amount approximately equal to the travel distance of the proboscis member **50.** This action opens the fluid path in the second flow control member **22** but does not open any fluid path to the atmosphere (see Figure 4). Next the proboscis member **50** is displaced farther into contact with the piston member **38** of the first flow control member **20** and continues to force the piston member away from the first seal **32.** This action opens the fluid path of the first flow control member **20** and fluid can now flow into or out of the second containerized system **14** or machine from the bottle or first containerized system **12.**

As indicated, the fluid passes from the bottle or first containerized system **12** into the first flow control member **20** through the first body member **26.** It then enters the opening **52** in the end of the proboscis member **50** and passes through the through channel **58** and out the side hole or exit port **56** in the proboscis member **50.** After exiting the proboscis member **50,** the fluid then passes through axial bore 57 and enters the inlet channel **61** of the second containerized system **14** thereby replenishing the second containerized system **14** with the fluid.

Removal of the first containerized system **12** from the machine or second containerized system **14** reverses the above action of the flow control members **20,22** and the liquid is not exposed to the customer using the machine. Thus, a dry fluid flow system is perceived by the customer.

| **Parts List** | |
|---|---|
| Flow Control System | 10 |
| First Containerized System | 12 |
| Second Containerized System | 14 |
| First Opening | 16 |
| Second Opening | 18 |
| First Flow Control Member | 20 |
| Second Flow Control Member | 22 |
| First Housing or Body Member | 26 |
| First Fluid Flow Channel | 28 |
| Central Portion | 30 |
| First Seal | 32 |
| Fluid Entrance Port | 33 |
| First Opening | 34 |
| Annular Spring | 36 |
| Piston Member | 38 |
| Second Housing or Body Member | 42 |
| Second Fluid Flow Channel | 44 |
| Second Flexible Seal | 46 |
| Shoulder Portion | 48 |
| Proboscis Member | 50 |
| Open End | 52 |
| Notched Portion | 54 |
| Exit Port | 56 |
| Axial Bore | 57 |
| Channel | 58 |
| Stop Member | 59 |
| Spring Member | 60 |
| Fluid Inlet Channel | 61 |
| First Face Flange | 70 |
| Second Face Flange | 72 |
| O-ring | 80 |
| First Rigid Housing Assemblage | 100 |
| Neck Down Portion | 102 |
| First Half Portion | 110 |
| Second Half Portion | 112 |
| Opposed Slots | 114 |
| Snaps | 116 |
| Cap | 118 |
| Closed End Portion | 122 |
| Partially Opened End Portion | 124 |

## Claims

1. A flow control system (10)for controlling the flow of fluid between first and second containerized systems (12, 14), the first containerized system having a first opening (16), and the second containerized system having a second opening (18), comprising:
a first flow control member (20) positioned at the first opening of the first containerized system, the first flow control member comprising a first body member (26) having a first fluid flow channel (28), a first seal (32) having a first opening (34) therethrough arranged in said first fluid flow channel, a fluid entrance port (33) in fluid communication with the first fluid flow channel located on the longitudinal surface of said channel, a spring member (36) retained in said first fluid flow channel, and a piston member (38) normally biased by the spring against the first seal to close the first fluid channel;
a second flow control member (22) positioned at the second opening, the second flow control member comprising a second body member (42) having a second fluid flow channel (44), a second seal (46) having a second opening therethrough arranged in the second fluid flow channel, a shoulder portion (48) in the second fluid flow channel, and a shaft member (50) slidable axially in the second opening of the second seal and in the first opening of the first seal, the shaft member having an open end portion (52, 54) at one end, and at least one exit port (56) on the opposite end within the second body member, and a through channel (58) extending from the open end to the exit port, the shaft member being attached to a stop member (59) biased forward to force the shaft member to seal against the second seal so as to close the at least one exit port;
wherein, when the first opening of the first containerized system is urged toward the second opening of the second containerized system, the shaft member partially withdraws from the second seal and the shaft member moves toward the shoulder portion; the shaft member penetrates the first opening of the first seal, the open end portion of the shaft member engages and displaces the piston member into deforming contact with the spring member thereby positioning the entrance port in fluid communication with the through channel of the shaft member; and
wherein, when the first opening of the first containerized system is urged into proximate contact with the second opening of the second containerized system, the shaft member withdraws through the second opening of the second seal and the stop member of the shaft member comes to rest on the shoulder portion, thereby enabling an open fluid flow path from the entrance port, through the open end of the shaft member, through the through channel of the shaft member, through the exit port, and to a fluid inlet channel (61) of the second containerized system; and
wherein, when the first opening of the first containerized system is urged away from the second opening of the second containerized system, the shaft member partially withdraws from the first opening of the first seal and away from the piston member thereby allowing the piston member to seal against the first seal, and sequentially the exit port of the shaft member is positioned in a sealing relation with the second seal, thus closing the open fluid flow path between the first and second containerized systems.

2. The flow control system recited in claim 1 wherein said second flow control member confines said exit port of said shaft member within said second seal when said second fluid flow path is closed.

3. The flow control system recited in claim 1 wherein the first and second seals are made of flexible materials.

4. The flow control system recited in claim 1 wherein an opening (90) is provided in the first fluid flow channel for retaining deformed portions of the spring when engaged by the piston.

5. The flow control system recited in claim 1 wherein the first containerized system includes a plastic bag positioned in a housing assemblage (100) comprising first and second half portions (110, 112), each having a plurality of opposed slots and snaps (114, 116) for interlocking said first half portion to said second half portion thereby forming interlocked half portions, said interlocked half portions defining a closed end portion and a partially opened end portion for receiving a necked down portion of the first body member.

6. A method for controlling fluid flow from a first containerized system (12) having a first opening (16), to a second containerized system (14) having a second opening (18), said method comprising the steps of:
providing a first flow control member (20) positioned in the first opening of the containerized system, said first flow control member comprising a first body member (26) having a first fluid flow channel (28), a first seal (32) having a first opening (34) therethrough arranged in said first fluid flow channel, a fluid entrance port (33) in fluid communication with the first fluid flow channel located on the longitudinal surface of said channel, a spring member (36) retained in said first fluid flow channel, and a piston member (38) normally biased by the spring against the first seal to close the first fluid channel;
providing a second flow control member (22) positioned in the fluid inlet channel of the second containerized system, said second flow control member comprising a second body member (42) having a second fluid flow channel (44), a second seal (46) having a second opening therethrough arranged in the second fluid flow channel, a shoulder portion (48) in the second fluid flow channel, and a shaft member (50) slidable axially in the second opening of the second seal until, in one direction, it engages the shoulder portion and enters the first opening of the first seal, the shaft member having an open end portion (52,54) at one end, and at least one exit port (56) on the opposite end within the second body member, and a through channel (58) extending from the open end to the exit port the shaft member being attached to a stop member (59) biased forward to force the shaft member to seal against the second seal so as to close the exit port (56);
urging the first opening of the first containerized system toward the second opening of the second containerized system so that the shaft member at least partially penetrates the first opening of the first seal, and subsequently engages and then displaces the piston toward the spring member thereby opening a first flow path extending between the entrance port, the opening of the shaft member, and through the through channel of the shaft member; and
urging the first opening of the first containerized system into proximate contact with the second opening of the second containerized system thereby opening a second fluid flow path extending from the entrance port, to the opening and through channel of the shaft member, through the exit port of the shaft member and terminating in the second fluid flow channel of the second containerized system ;
and urging the first opening of the first system away from the second opening of the second system, thereby closing the first flow path and the second fluid flow.

## Patentansprüche

1. Fluss-Steuerungsvorrichtung (10) zum Steuern des Flüssigkeitsstroms zwischen einem ersten und einem zweiten Behältersystem (12, 14), wobei das erste Behältersystem eine erste Öffnung (16) und das zweite Behältersystem eine zweite Öffnung (18) aufweist, und wobei die Vorrichtung folgende Komponenten umfasst:
- ein an der ersten Öffnung des ersten Behältersystems angeordnetes, erstes Fluss-Steuerungselement (20), welches ein erstes Hauptelement (26) mit einem ersten Flüssigkeitszuflusskanal (28), eine erste mit einer ersten hindurchgehenden Öffnung (34) versehene Dichtung (32), die in dem ersten Flüssigkeitszuflusskanal (28) angeordnet ist, eine mit dem ersten Flüssigkeitszuflusskanal in Flüssigkeitsverbindung stehende Flüssigkeitseintrittsöffnung (33), die sich an der Längsfläche des Kanals befindet, eine im ersten Flüssigkeitszuflusskanal gehaltene Feder (36) und einen Kolben (38) aufweist, der gegenüber der ersten Dichtung durch die Feder normalerweise vorgespannt ist, um den ersten Flüssigkeitszuflusskanal zu schließen;
- ein an der zweiten Öffnung angeordnetes, zweites Fluss-Steuerungselement (22), welches ein zweites Hauptelement (42) mit einem zweiten Flüssigkeitszuflusskanal (44), eine zweite mit einer zweiten hindurchgehenden Öffnung versehene Dichtung (46), die in dem zweiten Flüssigkeitszuflusskanal angeordnet ist, ein im zweiten Flüssigkeitszuflusskanal befindliches Schulterteil (48), und einen Schaft (50) aufweist, der in der zweiten Öffnung der zweiten Dichtung und in der ersten Öffnung der ersten Dichtung axial gleitet, wobei der Schaft an einem Endabschnitt ein offenes Ende (52, 54) und am gegenüberliegenden Endabschnitt innerhalb des zweiten Hauptelements mindestens eine Ausgangsöffnung (56), sowie einen durchgehenden Kanal (58) aufweist, der sich vom offenen Ende bis zur Ausgangsöffnung erstreckt, und wobei der Schaft an einem Anschlag (59) befestigt ist, der vorwärts vorgespannt ist und bewirkt, dass der Schaft gegen die zweite Dichtung abdichtet und so die mindestens eine Ausgangsöffnung schließt; wobei
- der Schaft sich teilweise von der zweiten Dichtung zurückzieht und sich in Richtung des Schulterteils bewegt, wenn die erste Öffnung des ersten Behältersystems in Richtung der zweiten Öffnung des zweiten Behältersystems geschoben wird; wobei der Schaft sich in die erste Öffnung der ersten Dichtung schiebt, das offene Ende des Schafts in Eingriff mit dem Kolben gelangt, ihn in Verformungskontakt mit der Feder verschiebt und dadurch die Eingangsöffnung in Flüssigkeitsverbindung mit dem durch den Schaft verlaufenden Kanal versetzt;
- der Schaft sich durch die zweite Öffnung der zweiten Dichtung zurückzieht und der Anschlag des Schafts auf dem Schulterteil zu liegen kommt, wenn die erste Öffnung des ersten Behältersystems in unmittelbaren Kontakt mit der zweiten Öffnung des zweiten Behältersystems gebracht wird, wodurch von der Eingangsöffnung her durch das offene Ende des Schafts, durch den durch den Schaft verlaufenden Kanal, durch die Ausgangsöffnung bis zu einem Flüssigkeitseinlasskanal (61) ein freier Flüssigkeitsstromweg freigegeben wird; und
- der Schaft sich teilweise von der ersten Öffnung der ersten Dichtung zurückzieht und vom Kolben entfernt, wenn die erste Öffnung des ersten Behältersystems von der zweiten Öffnung des zweiten Behältersystems wegbewegt wird, wodurch der Kolben gegen die erste Dichtung abdichten kann und anschließend die Auslassöffnung des Schafts in eine Abdichtposition mit der zweiten Dichtung gebracht wird und somit der freie Flüssigkeitsstromweg zwischen dem ersten und zweiten Behältersystem geschlossen wird.

2. Vorrichtung nach Anspruch 1, **dadurch gekennzeichnet, dass** das zweite Fluss-Steuerungselement die Auslassöffnung des Schafts innerhalb der zweiten Dichtung absperrt, wenn der zweite Flüssigkeitsstromweg geschlossen wird.

3. Vorrichtung nach Anspruch 1, **dadurch gekennzeichnet, dass** die erste und zweite Dichtung aus elastischen Materialien hergestellt werden.

4. Vorrichtung nach Anspruch 1, **dadurch gekennzeichnet, dass** im ersten Flüssigkeitszuflusskanal eine Öffnung (90) vorgesehen ist, die verformte Teile der Feder aufnimmt, wenn diese sich in Eingriff mit dem Kolben befindet.

5. Vorrichtung nach Anspruch 1, **dadurch gekennzeichnet, dass** das erste Behältersystem einen Kunststoffbeutel aufweist, der in einem Gehäuse (100) angeordnet ist, welches aus einer ersten und zweiten Hälfte (110, 112) besteht, die jeweils eine Vielzahl von gegenüberliegenden Schlitzen und Rastelementen aufweisen, welche die erste Hälfte mit der zweiten Hälfte verbinden und somit gekoppelte Hälften bilden, die einen geschlossenen Endabschnitt und einen teilweise offenen Endabschnitt für die Aufnahme eines eingeschnürten Teils des ersten Hauptelements definieren.

6. Verfahren zum Steuern des Flüssigkeitsstroms von einem ersten Behältersystem (12) mit einer ersten Öffnung (16) zu einem zweiten Behältersystem (14) mit einer zweiten Öffnung (18), wobei das Verfahren folgende Schritte umfasst:
- Bereitstellen eines an der ersten Öffnung des ersten Behältersystems angeordneten, ersten Fluss-Steuerungselements (20), welches ein erstes Hauptelement (26) mit einem ersten Flüssigkeitszuflusskanal (28), eine erste mit einer ersten hindurchgehenden Öffnung (34) versehene Dichtung (32), die in dem ersten Flüssigkeitszuflusskanal (28) angeordnet ist, eine mit dem ersten Flüssigkeitszuflusskanal in Flüssigkeitsverbindung stehende Flüssigkeitseintrittsöffnung (33), die sich an der Längsfläche des Kanals befindet, eine im ersten Flüssigkeitszuflusskanal gehaltene Feder (36) und einen Kolben (38) aufweist, der gegenüber der ersten Dichtung durch die Feder normalerweise vorgespannt ist, um den ersten Flüssigkeitszuflusskanal zu schließen;
- Bereitstellen eines im Flüssigkeitseinlasskanal des zweiten Behältersystems angeordneten, zweiten Fluss-Steuerungselements (22), welches ein zweites Hauptelement (42) mit einem zweiten Flüssigkeitszuflusskanal (44), eine zweite mit einer zweiten hindurchgehenden Öffnung versehene Dichtung (46), die in dem zweiten Flüssigkeitszuflusskanal angeordnet ist, ein im zweiten Flüssigkeitszuflusskanal befindliches Schulterteil (48), und einen Schaft (50) aufweist, der in der zweiten Öffnung der zweiten Dichtung axial gleitet, bis er in Eingriff mit dem Schulterteil kommt und in die erste Öffnung der ersten Dichtung eintritt, wobei der Schaft an einem Endabschnitt ein offenes Ende und am gegenüberliegenden Endabschnitt innerhalb des zweiten Hauptelements mindestens eine Ausgangsöffnung (56), sowie einen durchgehenden Kanal (58) aufweist, der sich vom offenen Ende bis zur Ausgangsöffnung erstreckt, und wobei der Schaft an einem Anschlag (59) befestigt ist, der vorwärts vorgespannt ist und bewirkt, dass der Schaft gegen die zweite Dichtung abdichtet und so die mindestens eine Ausgangsöffnung (56) schließt;
- Bewegen der ersten Öffnung des ersten Behältersystems in Richtung auf die zweite Öffnung des zweiten Behältersystems, so dass der Schaft zumindest teilweise in die erste Öffnung der ersten Dichtung eindringt und anschließend mit dem Kolben in Eingriff kommt und ihn in Richtung der Feder verschiebt, wodurch ein erster Flüssigkeitsstromweg geöffnet wird, der sich von der Eingangsöffnung zur Öffnung des Schafts und durch den durch ihn hindurchgehenden Kanal erstreckt;
- Bewegen der ersten Öffnung des ersten Behältersystems in unmittelbaren Kontakt mit der zweiten Öffnung des zweiten Behältersystems, wodurch ein zweiter Flüssigkeitsstromweg geöffnet wird, der sich von der Eingangsöffnung über die Öffnung und den durchgehenden Kanal des Schafts bis zur Auslassöffnung des Schafts und durch diese hindurch erstreckt, und im zweiten Flüssigkeitszuflusskanal des zweiten Behältersystems endet; und
- Bewegen der ersten Öffnung des ersten Behältersystems weg von der zweiten Öffnung des zweiten Behältersystems, wodurch der erste Flüssigkeitsstromweg und der zweite Flüssigkeitsstrom geschlossen werden.

## Revendications

1. Système de commande d'écoulement (10) destiné à commander l'écoulement d'un fluide entre des premier et second systèmes de récipient (12, 14), le premier système de récipient comportant une première ouverture (16) et le second système de récipient comportant une seconde ouverture (18), comprenant :
un premier élément de commande d'écoulement (20) positionné à la première ouverture du premier système de récipient, le premier élément de commande d'écoulement comprenant un premier élément de corps (26) comportant un premier canal d'écoulement de fluide (28), un premier joint (32) comportant une première ouverture (34) au travers de celui-ci agencé dans ledit premier canal d'écoulement de fluide, une ouverture d'entrée de fluide (33) en communication de fluide avec le premier canal d'écoulement de fluide situé sur la surface longitudinale dudit canal, un élément de ressort (36) retenu dans ledit premier canal d'écoulement de fluide, et un élément de piston (38) sollicité normalement par le ressort contre le premier joint pour refermer le premier canal de fluide,
un second élément de commande d'écoulement (22) positionné à la seconde ouverture, le second élément de commande d'écoulement comprenant un second élément de corps (42) comportant un second canal d'écoulement de fluide (44), un second joint (46) comportant une seconde ouverture au travers de celui-ci, agencée dans le second canal d'écoulement de fluide, une partie d'épaulement (48) dans le second canal d'écoulement de fluide, et un élément d'axe (50) pouvant coulisser de façon axiale dans la seconde ouverture du second joint et dans la première ouverture du premier joint, l'élément d'axe comportant une partie d'extrémité ouverte (52, 54) à une extrémité, et au moins un orifice de sortie (56) sur l'extrémité opposée à l'intérieur du second élément de corps, et un canal traversant (58) s'étendant depuis l'extrémité ouverte jusqu'à l'orifice de sortie, l'élément d'axe étant fixé à un élément d'arrêt (59) sollicité vers l'avant pour forcer l'élément d'axe à une fermeture étanche contre le second joint de façon à refermer le au moins un orifice de sortie,
dans lequel, lorsque la première ouverture du premier système de récipient est sollicitée en direction de la seconde ouverture du second système de récipient, l'élément d'axe se rétracte partiellement du second joint et l'élément d'axe se déplace en direction de la partie d'épaulement, l'élément d'axe pénètre dans la première ouverture du premier joint, la partie d'extrémité ouverte de l'élément d'axe entre en contact et déplace l'élément de piston jusqu'en contact de déformation avec l'élément de ressort en positionnant ainsi l'orifice d'entrée en communication de fluide avec le canal traversant de l'élément d'axe, et
dans lequel, lorsque la première ouverture du premier système de récipient est sollicitée jusqu'en contact rapproché de la seconde ouverture du second système de récipient, l'élément d'axe se rétracte au travers de la seconde ouverture du second joint et l'élément d'arrêt de l'élément d'axe arrive à reposer sur la partie d'épaulement, en activant ainsi un trajet d'écoulement de fluide ouvert depuis l'orifice d'entrée, au travers de l'extrémité ouverte de l'élément d'axe, au travers du canal traversant de l'élément d'axe, au travers de l'orifice de sortie, et jusqu'à un canal d'orifice d'entrée de fluide (61) du second système de récipient, et
dans lequel, lorsque la première ouverture du premier système de récipient est sollicitée à l'écart de la seconde ouverture du second système de récipient, l'élément d'axe se rétracte partiellement de la première ouverture du premier joint et à l'écart de l'élément de piston en permettant ainsi à l'élément de piston de reposer de façon étanche contre le premier joint, et en séquence, l'orifice de sortie de l'élément d'axe est positionné en relation d'étanchéité avec le second joint, en refermant ainsi le trajet d'écoulement de fluide ouvert entre les premier et second systèmes de récipient.

2. Système de commande d'écoulement selon la revendication 1, dans lequel ledit second élément de commande d'écoulement limite ledit orifice de sortie dudit élément d'axe à l'intérieur dudit second joint lorsque ledit second trajet d'écoulement de fluide est fermé.

3. Système de commande d'écoulement selon la revendication 1, dans lequel les premier et second joints sont faits de matériaux souples.

4. Système de commande d'écoulement selon la revendication 1, dans lequel une ouverture (90) est ménagée dans le premier canal d'écoulement de fluide afin de retenir des parties déformées du ressort lorsqu'il est mis en contact avec le piston.

5. Système de commande d'écoulement selon la revendication 1, dans lequel le premier système de récipient comprend un sachet en matière plastique positionné dans un assemblage de boîtier (100) comprenant des première et seconde demi-parties (110, 112), chacune comportant une pluralité de fentes et d'attaches rapides opposées (114, 116) destinées à inter-verrouiller ladite première demi-partie sur ladite seconde demi-partie en formant ainsi des demi-parties inter-verrouillées, lesdites demi-parties inter-verrouillées définissant une partie d'extrémité fermée et une partie d'extrémité partiellement ouverte destinée à recevoir une partie étranglée du premier élément de corps.

6. Procédé destiné à commander un écoulement d'un fluide depuis un premier système de récipient (12) comportant une première ouverture (16) jusqu'à un second système de récipient (14) comportant une seconde ouverture (18), ledit procédé comprenant les étapes consistant à :
prévoir un premier élément de commande d'écoulement (20) positionné dans la première ouverture du système de récipient, ledit premier élément de commande d'écoulement comprenant un premier élément de corps (26) comportant un premier canal d'écoulement de fluide (28), un premier joint (32) comportant une première ouverture (34) au travers de celui-ci, agencé dans ledit premier canal d'écoulement de fluide, un orifice d'entrée de fluide (33) en communication de fluide avec le premier canal d'écoulement de fluide situé sur la surface longitudinale dudit canal, un élément de ressort (36) retenu dans ledit premier canal d'écoulement de fluide, et un élément de piston (38) normalement sollicité par le ressort contre le premier joint pour refermer le premier canal de fluide,
fournir un second élément de commande d'écoulement (22) positionné dans le canal d'entrée de fluide du second système de récipient, ledit second élément de commande d'écoulement comprenant un second élément de corps (42) comportant un second canal d'écoulement de fluide (44), un second joint (46) comportant une seconde ouverture au travers de celui-ci agencée dans le second canal d'écoulement de fluide, une partie d'épaulement (48) dans le second canal d'écoulement de fluide et un élément d'axe (50) pouvant coulisser axialement dans la seconde ouverture du second joint jusqu'à ce que, dans une direction, il entre en contact avec la partie d'épaulement et pénètre dans la première ouverture du premier joint, l'élément d'axe comportant une partie d'extrémité ouverte (52, 54) à une extrémité et au moins un orifice de sortie (56) sur l'extrémité opposée à l'intérieur du second élément de corps, et un canal traversant (58) s'étendant depuis l'extrémité ouverte jusqu'à l'orifice de sortie, l'élément d'axe étant fixé à un élément d'arrêt (59) sollicité vers l'avant pour forcer l'élément d'axe à reposer de façon étanche contre le second joint de façon à refermer l'orifice de sortie (56),
solliciter la première ouverture du premier système de récipient en direction de la seconde ouverture du second système de récipient de sorte que l'élément d'axe pénètre au moins partiellement dans la première ouverture du premier joint, et entre ensuite en contact puis déplace le piston vers l'élément de ressort en ouvrant ainsi un premier trajet d'écoulement s'étendant entre l'orifice d'entrée, l'ouverture de l'élément d'axe, et au travers du canal traversant de l'élément d'axe, et
solliciter la première ouverture du premier système de récipient jusqu'en contact rapproché avec la seconde ouverture du second système de récipient en ouvrant ainsi un second trajet d'écoulement de fluide s'étendant depuis l'orifice d'entrée, vers l'ouverture et au travers du canal de l'élément d'axe, au travers de l'orifice de sortie de l'élément d'axe et aboutissant dans le second canal d'écoulement de fluide du second système de récipient,
et solliciter la première ouverture du premier système à l'écart de la seconde ouverture du second système, en refermant ainsi le premier trajet d'écoulement et le second écoulement de fluide.
